# EUROPEAN PATENT APPLICATION

(11) **EP 2 426 422 A2**
(43) Date of publication of application: **07.03.2012**
(21) Application number: 10187944.3
(22) Date of filing: 18.10.2010
(51) Int. Cl.: F24D 3/14, F24F 5/00

(54) **Radiant floor heating and cooling system**

(30) Priority: 02.09.2010 CN 201010272104
(71) Applicant: Guo, Zhaojun, Weining Road Changning District Shanghai 200336 (CN)
(72) Inventor: Guo, Zhaojun, Weining Road Changning District Shanghai 200336 (CN)
(74) Representative: Roberts, Mark Peter

(57) **Abstract**

A radiant floor heating and cooling system, includes: a thermostatic arrangement including a thermostatic pipe for adjusting temperature, a returning pipe, a plurality of three-way valve thermostatic devices, and a radiant pipe including a first end and a second end respectively connected to the thermostatic pipe and the returning pipe via the three-way valve thermostatic devices; and a floor, including a floor board, an upper lock device positioned on a side of the floor board and defines an upwardly concave upper support cavity, and a lower lock device positioned on another side of the floor board and defines a downwardly concave lower support cavity, wherein the radiant pipe is horizontally positioned in the lower support cavity, so that when the upper lock device of the floor engages with the lower lock device of an adjacent floor, the support cavities matches to form a receiving cavity which receives the radiant pipe.

## Description

The present invention relates to a floor temperature adjustment system, and more particularly to a radiant heating and/or cooling system.

Nowadays, the technology of radiant floor heating develops at full speed. As a relatively new room temperature adjustment mode, radiant temperature-controlling technology is considered as a very healthy and comfortable temperature adjustment mode, especially by household consumers.

However, there are many disadvantages of conventional technology. The first one is that radiant floor technology is too simple, especially because air condensate water often appears in radiant floor cooling systems. This means that the vast majority of systems are limited to only one function - heating. Although it is theoretically possible to prevent air condensate water appearing by reducing temperature differences, the problem is not really practically solved. Actually to this day, there are no products designed and manufactured especially for both radiant floor heating and cooling.

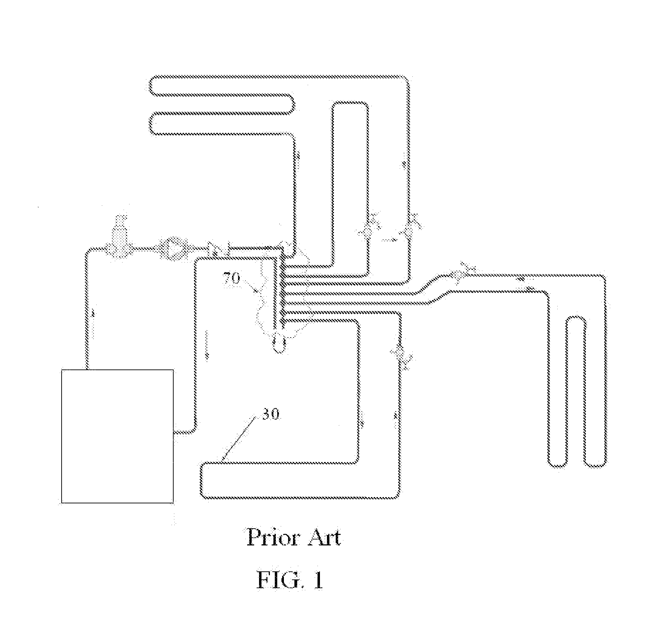

When considering known heating systems, the current construction technology is almost one-off, there are many potential safety hazards: difficult to repair and construct, resource-wasting, especially the environmental pollution caused by the dumped thermal insulation materials. Also the current temperature control system is technically simple as shown in Figure 1. Typically, the radiant recycle loop mainly uses a "centralization manifold", referred to as numeral 70 in FIG. 1, but this kind of conjoined structure has a great limitation in the distribution of pipes. The returning end of the branch pipeline is of the structure of central run-back, so that many pipes centralize inevitably in the manifold area 70. Many pipes that are from different directions cause the result that many radiant pipes become entangled. In such a manner, all pipes have to be constructed uniformly, and different room spaces need different designs of pipe layout and so the workload increases. For family houses that are small and complex, it's very difficult to pave the pipes, so the manifold has to be improved to suit a new ground paving form to ensure the new ground paving form has a uniform layout and improved work efficiency.

One aim of the present invention is to provide a radiant floor heating and cooling system, which is able to achieve the effects of heating and cooling, so it will adapt for different seasons and areas and is hard to be soaked and damaged by the air condensate water.

Another aim of the present invention is to provide a radiant floor heating system which is also suited to be a cooling system, which is capable of radiating power to an interior room space through a radiant pipe inside a floor and a floor board, and addressing the problem of the accumulation of air condensate water. This problem and also the problem of heat loss in a heating system is addressed by adapting one or more grooves in the floor board, so that the floor system can have both radiant heating and cooling functions.

In a first aspect, the invention provides a radiant floor heating and/or cooling system, comprising a thermostatic arrangement, which comprises a thermostatic pipe for adjusting a temperature, a returning pipe, and a radiant pipe comprising a first end and a second end, wherein said first end of said radiant pipe is connected to said thermostatic pipe and said second end of said radiant pipe is connected to said returning pipe and a floor board having an upper lock device which is positioned on a first side of said floor board and defines an upwardly concave upper support cavity, and a lower lock device which is positioned on a second side of said floor board and defines a downwardly concave lower support cavity, wherein said radiant pipe is horizontally positioned in said lower support cavity, wherein when said upper lock device of said floor board engages with said lower lock device of an adjacent floor board, said upper support cavity and said lower support cavity together form a receiving cavity for receiving said radiant pipe, thus embedding said radiant pipe between two adjacent floor boards.

This prevents the radiant pipe contacting the ground directly, to reduce the energy loss.

Preferably, said lower support cavity of said lower lock device further has one or more grooves or ridges, wherein said one or more grooves or ridges are positioned on a bottom of said lower support cavity along a direction of said radiant pipe for receiving any air condensate water which is generated on an outer wall of said radiant pipe and discharging the air condensate water out of said floor.

With the foregoing structure, an energy that the radiant pipe radiates will be used sufficiently to effectively adjust the temperature of the floor, and increase installing efficiency, facilitating overhaul.

Preferably, said one or more grooves or ridges reduce a contact area of said radiant pipe and a bottom of said floor board so as to impede energy radiating downwardly.

Preferably, said lower support cavity further comprises a guiding groove connected to said one or more grooves or ridges to lead the air condensate water which is generated on said outer wall of said radiant pipe to said one or more grooves or ridges.

Preferably, one or more grooves or ridges of said lower support cavity of said lower lock device has one or more discharging holes for discharging any air condensate water in said one or more grooves or ridges out of said floor board.

Preferably, said upper lock device, said lower lock device, said upper support cavity and said lower support cavity further comprise a sealed coating surface to avoid being soaked and damaged by the air condensate water.

Preferably, said floor board further comprises a thermal-protective coating which is positioned on a bottom of said floor board and said lower lock device.

Preferably, a longitudinal section of said upper lock device is shaped as a transverse "F" and a longitudinal section of said lower lock device is shaped as a transverse "F", so that said upper lock device of said floor board and said lower lock device of an adjacent floor board are engaged to lock adequately and locate with one another.

In the present invention wherein the "F" shaped upper lock device engages with the "F" shaped lower lock device when two adjacent floors are joined up, it's easy to install and disassemble.

Preferably, said radiant pipe is selected from a water pipe, an oil pipe or an electric cable.

Preferably, an upper opening of said downwardly concave lower support cavity is smaller than a lower inner part of said downwardly concave lower support cavity, so that said radiant pipe is embedded in said lower inner part of said downwardly concave lower support cavity in installing said radiant pipe, so that said upper opening prevents said radiant pipe sticking up from said lower support cavity. This allows the system to be installed by one person working alone.

Preferably, said thermostatic arrangement further comprises a plurality of three-way valve thermostatic devices which comprise flow control components, wherein said three-way valve thermostatic devices are positioned on a point of said thermostatic pipe and said returning pipe, said radiant pipe has a first end which is connected to said thermostatic pipe through a three-way valve thermostatic device and a second end which is connected to said returning pipe through a three-way valve thermostatic device, so that said two ends of said radiant pipe are respectively connected to said thermostatic pipe and said returning pipe through said three-way valve thermostatic devices to form a radial loop.

In another aspect, the invention provides a floor board for use in the radiant floor heating and/or cooling system, said floor board comprising an upper lock device on a first edge of said floor board which defines a concave upper support cavity; a lower lock device on a second edge of said floor board which defines a concave lower support cavity; wherein said upper lock device is arranged to be engageable with a lower lock device of an adjacent floor board to form a receiving cavity for embedding a radiant pipe between said adjacent floor boards.

The present invention provides a radiant floor heating and cooling system, which adopts the form of finished product assembly, so the work efficiency is improved, the labour intensity is reduced and a lot of labour time and cost is saved. The differences caused by the inaccurate procedures of installation can be removed, so the quality deserves a unified and effective safeguard. In addition, the floor is able to be disassembled and recycled, which is good for architectural design and reusing of materials, so the dumped building materials can be reduced and the environmental problem which is caused by disassembling to bury can be solved, so that the environment, water and soil will not be polluted and ruined. In technology, it achieves the aim that site operation develops to finished products.

The present invention also provides a radiant floor heating and cooling system, which comprises a technology of freely positioning output points and returning points, the technology can be achieved through positioning two or more three-way valves on a thermostatic pipe and a returning pipe, so the radiant pipes are not only intensively connected to a distributive pipe, each of the radiant pipes is independent. The system provides an excellent operating logic and gives flexibility to a follow-up system. It is very appropriate to the installation of the heating system of home and commerce, and it can achieve the effects as follows: first, the "returning" points are able to be positioned freely, a multitude of run-back pipelines are not needed, so it avoids that a multitude of pipes centralizes to make a part too hot or too cool, a layout of a terminal pipe is flexible; second, the layout of the pipes is neat, the scale reduces, the difficulties of the system design decreases, it's not needed to consider balance and use a large scale of mechanical parts; third, the independent system has a high prefabrication which can encourage the development of division of work and improve the technology of heating and cooling system.

These and other objectives, features, and advantages of the present invention will become apparent from the following detailed description, the accompanying drawings, and the appended claims.

In the drawings:
Fig. 1 is a schematic view of a thermostatic arrangement of a radiant floor heating and cooling system according to prior art, where all the radiant pipes (30) are intensively connected to a thermostatic pipe (70).
Fig. 2 is a schematic view of a thermostatic arrangement according to a preferred embodiment of the present invention.
Fig. 3 is an installation schematic view of the thermostatic arrangement according to the preferred embodiment of the present invention.
Fig. 4 is an installation top view of the thermostatic arrangement according to the preferred embodiment of the present invention.
Fig. 5 is a schematic view of the installation according to the thermostatic arrangement of the preferred embodiment of the present invention.
Fig. 6 is a partial sectional view of the thermostatic arrangement according to the preferred embodiment of the present invention.
Fig. 7 is a side view of the thermostatic arrangement according to the preferred embodiment of the present invention.

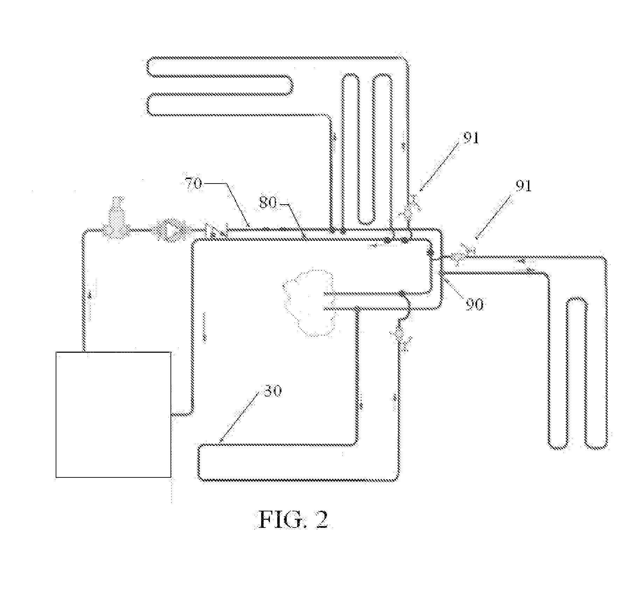

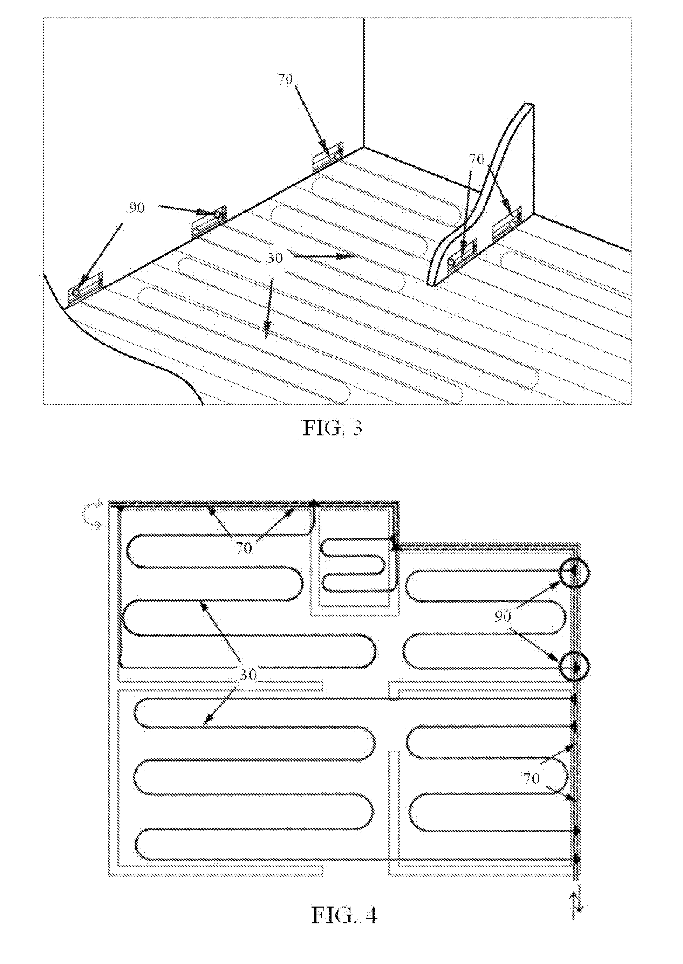

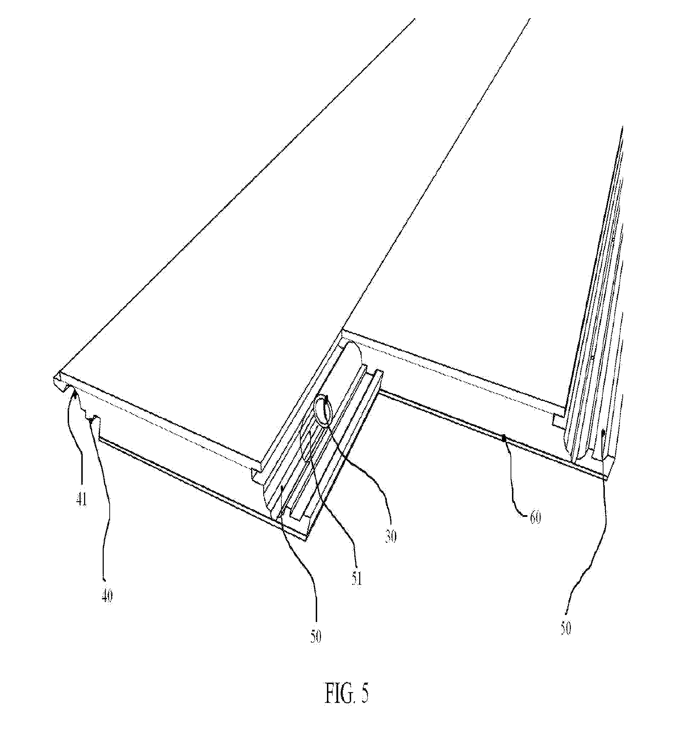

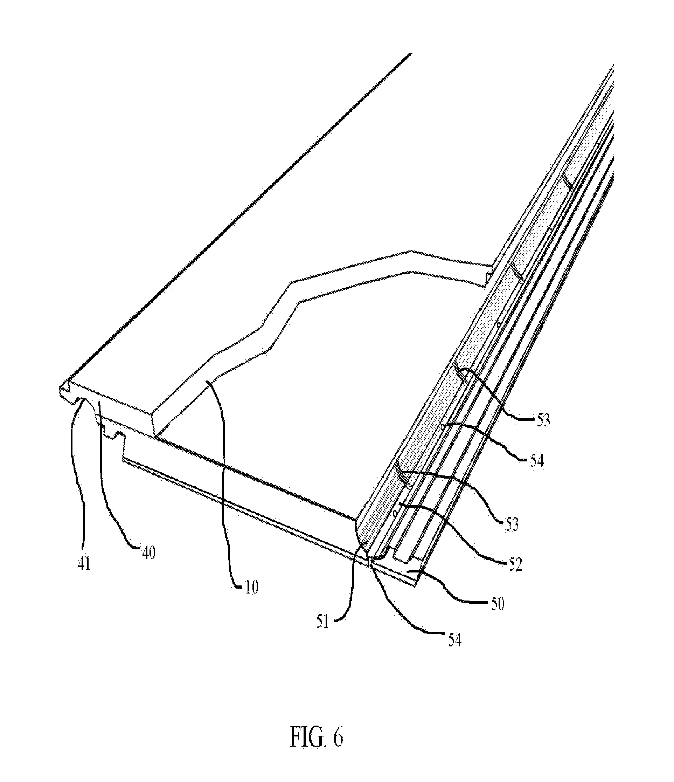

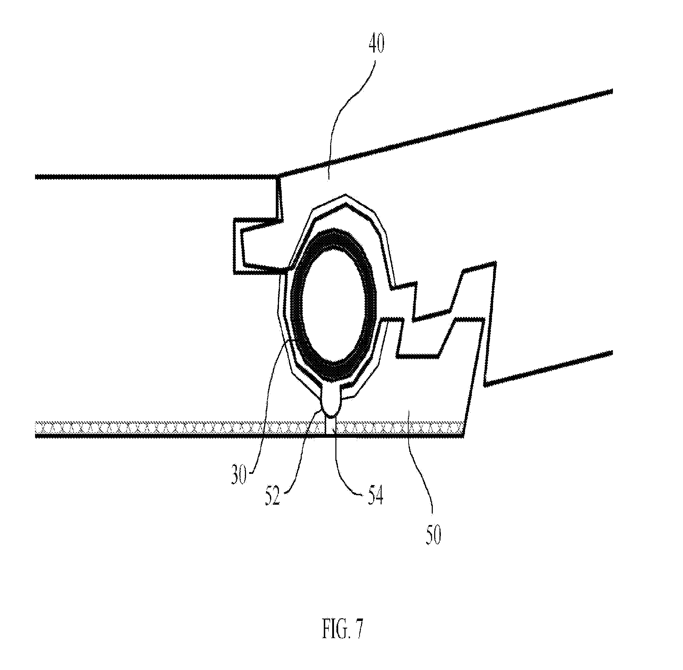

Referring to Fig. 2 to Fig. 7 of the drawings, a radiant floor heating and/or cooling system according to a preferred embodiment of the present invention is illustrated, wherein the radiant floor heating and/or cooling system comprises a thermostatic arrangement and a floor.

The thermostatic arrangement comprises a thermostatic pipe 70 for adjusting temperature, a returning pipe 80 and a radiant pipe 30 having a first end and a second end, wherein the first end of the radiant pipe 30 is connected to the thermostatic pipe 70, the second end of the radiant pipe 30 is connected to the returning pipe 80.

The floor comprises a floor board 10, an upper lock device 40 which is positioned on a first side of the floor board 10 and defines an upwardly concave upper support cavity 41, and a lower lock device 50 which is positioned on a second side of the floor board 10 and defines a downwardly concave lower support cavity 51, wherein the radiant pipe 30 is horizontally positioned in the lower support cavity 51, so that when the upper lock device 40 of the floor board engages with the lower lock device 50 of an adjacent floord board, the upper support cavity 41 and the lower support cavity 51 match to form a receiving cavity which receives the radiant pipe 30, thus, the radiant pipe 30 is embedded in the two adjacent floors, so as to make the best use of the energy that the radiant pipe 30 radiates to effectively adjust the temperature of the floor and avoid energy loss.

The upper lock device 40 is preferably upwardly concave and a longitudinal section of the upper lock device 40 is a "F" shape which is transverse and upward. The lower lock device 50 is preferably downwardly concave, and a longitudinal section of the lower lock device 50 is a "F" shape which is transverse and downward, so that the upper lock device 40 of the floor board and the lower lock device 50 of an adjacent floor board are engaged to lock adequately and locate in installing the floor.

It is worth mentioning that the upper support cavity 41 and the lower support cavity 51 can be embodied as cambered, quadrate, trapezoidal or any other concave forms.

According to a preferred embodiment of the present invention, the downwardly concave lower support cavity 51 has an upper opening smaller than a lower inner part thereof, so that the radiant pipe 30 is embedded in the lower inner part of the downwardly concave lower support cavity 51 in installing the radiant pipe 30, the upper opening is able to prevent the radiant pipe 30 sticking up from the lower support cavity 51, so only one person can handle all the components.

The present invention can supply both heat and cooling. When supplying cooling, in order to prevent the air condensate water, which is transformed on the radiant pipe 30 from the water vapor in the air, accumulating inside the floor board 10 and damaging the floor, the lower lock device 50 further has one or more grooves 52 or ridges, the grooves 52 or ridges are preferably positioned on a bottom of the lower support cavity 51 along a direction of the radiant pipe 30 for receiving the air condensate water which is generated on an outer wall of the radiant pipe 30 when the thermostatic pipe 70 supplies cooling, and discharging the air condensate water out of the floor. The grooves 52 or ridges are also preferably used to insulate the temperature - the energy will not radiate downwardly - so prior art chemical thermal insulation material is replaced by an air-gap structure.

Further, the lower lock device 50 preferably has a plurality of guiding grooves 53 provided on the lower support cavity 51 and extending parallelly along the radiant pipe 30, for guiding the air condensate water which is generated on an outer wall of the radiant pipe 30 when the thermostatic pipe 70 supplies cooling to the grooves 52, and preferably also at least a discharging hole 54 provided on a bottom of the grooves 52.

Further, the lock device 40, the lower lock device 50, the upper support cavity 41 and the lower support cavity 51 each further comprise a sealed coating surface which is used to avoid the floor board being soaked and damaged by the air condensate water.

The person skilled in the art can choose many kinds of transmission medium as the radiant pipe 30, for example, the radiant pipe 30 can be embodied as a water pipe, an oil pipe or an electric cable.

Furthermore, the floor preferably further comprises a thermal-protective coating 60 which is positioned underneath the bottom of the floor board 10 and the lower lock device 50, so that energy does not easily transfer to the floor slab and the surrounding wall, reducing heat loss.

The thermostatic arrangement optionally comprises a plurality of three-way valve thermostatic devices 90 which can respectively comprise flow control components 91 that control a flow. The radiant pipe 30 is preferably connected to the thermostatic pipe 70 through the three-way valve thermostatic devices 90, so the radiant pipe 30 avoids connecting to only one point of a manifold and intensive pipes do not appear. Hence, the phenomenon that a part is too hot and too cool will not appear and the layout of the pipeline is not complex. The three-way valve thermostatic devices 90 are preferably compact in size so as to suit temperature control systems that belong to a type of embedded-in-wall.

With the foregoing structure, the present invention particularly applies to the building of new house, the thermostatic pipe 70 and the returning pipe 80 can be prefabricated in several positions of the house, so the radiant pipe 30 finishes the work of connecting and adjusting, so the level of building heating and/or cooling is improved.

Embodiments of the invention have been shown and described for the purposes of illustrating the functional and structural principles of the present invention and are subject to change without departure from such principles. Therefore, this invention includes all modifications encompassed within the scope of the following claims.

## Claims

1. A radiant floor heating and/or cooling system, comprising:
a thermostatic arrangement, which comprises a thermostatic pipe (70) for adjusting a temperature, a returning pipe (80), and a radiant pipe (30) comprising a first end and a second end, wherein said first end of said radiant pipe (30) is connected to said thermostatic pipe (70) and said second end of said radiant pipe (30) is connected to said returning pipe (80); and
a floor board (10) having an upper lock device (40) which is positioned on a first side of said floor board (10) and defines an upwardly concave upper support cavity (41), and a lower lock device (50) which is positioned on a second side of said floor board (10) and defines a downwardly concave lower support cavity (51), wherein said radiant pipe (30) is horizontally positioned in said lower support cavity (51), wherein when said upper lock device (40) of said floor board (10) engages with said lower lock device (50) of an adjacent floor board (10), said upper support cavity (40) and said lower support cavity (51) together form a receiving cavity for receiving said radiant pipe (30), thus embedding said radiant pipe (30) between two adjacent floor boards.

2. The radiant floor heating and/or cooling system according to claim 1, wherein said lower support cavity (51) of said lower lock device (50) further has one or more grooves or ridges (52), wherein said one or more grooves or ridges (52) are positioned on a bottom of said lower support cavity (51) along a direction of said radiant pipe (30) for receiving any air condensate water which is generated on an outer wall of said radiant pipe (30) and discharging the air condensate water out of said floor.

3. The radiant floor heating and/or cooling system according to claim 2, wherein said one or more grooves or ridges (52) reduce a contact area of said radiant pipe (30) and a bottom of said floor board so as to impede energy radiating downwardly.

4. The radiant floor heating and/or cooling system according to claim 2 or 3, wherein said lower support cavity (51) further comprises a guiding groove (53) connected to said one or more grooves or ridges (52) to lead the air condensate water which is generated on said outer wall of said radiant pipe (30) to said one or more grooves or ridges (52).

5. The radiant floor heating and/or cooling system according to claim 2, 3 or 4, wherein said one or more grooves or ridges (52) of said lower support cavity (51) of said lower lock device (50) has one or more discharging holes (54) for discharging any air condensate water in said one or more grooves or ridges (52) out of said floor board (10).

6. The radiant floor heating and/or cooling system according to any one of the preceding claims, wherein said upper lock device (40), said lower lock device (50), said upper support cavity (41) and said lower support cavity (51) further comprise a sealed coating surface to avoid being soaked and damaged by the air condensate water.

7. The radiant floor heating and/or cooling system according to any one of the preceding claims, wherein said floor board (10) further comprises a thermal-protective coating which is positioned on a bottom of said floor board (10) and said lower lock device (50).

8. The radiant floor heating and/or cooling system according to any one of the preceding claims, wherein a longitudinal section of said upper lock device (40) is shaped as a transverse "F" and a longitudinal section of said lower lock device (50) is shaped as a transverse "F", so that said upper lock device (40) of said floor board and said lower lock device (50) of an adjacent floor board are engaged to lock adequately and locate with one another.

9. The radiant floor heating and/or cooling system according to any one of the preceding claims, wherein said radiant pipe (30) is selected from a water pipe, an oil pipe or an electric cable.

10. The radiant floor heating and/or cooling system according to any one of the preceding claims, wherein an upper opening of said downwardly concave lower support cavity (51) is smaller than a lower inner part of said downwardly concave lower support cavity (51), so that said radiant pipe (30) is embedded in said lower inner part of said downwardly concave lower support cavity (51) in installing said radiant pipe, so that said upper opening prevents said radiant pipe sticking up from said lower support cavity.

11. The radiant floor heating and/or cooling system according to any one of the preceding claims, wherein said thermostatic arrangement further comprises a plurality of three-way valve thermostatic devices (40) which comprise flow control components, wherein said three-way valve thermostatic devices (40) are positioned on a point of said thermostatic pipe (70) and said returning pipe (80), said radiant pipe (30) has a first end which is connected to said thermostatic pipe (170) through a three-way valve thermostatic device (90) and a second end which is connected to said returning pipe (80) through a three-way valve thermostatic device (40), so that said two ends of said radiant pipe (30) are respectively connected to said thermostatic pipe (70) and said returning pipe (80) through said three-way valve thermostatic devices (90) to form a radial loop.

12. A floor board for use in the radiant floor heating and/or cooling system of any one of the preceding claims, said floor board (10) comprising:
an upper lock device (40) on a first edge of said floor board (10) which defines a concave upper support cavity (41);
a lower lock device (50) on a second edge of said floor board (10) which defines a concave lower support cavity (51);
wherein said upper lock device (40) is arranged to be engageable with a lower lock device (5) of an adjacent floor board (10) to form a receiving cavity for embedding a radiant pipe (30) between said adjacent floor boards (10).
